# EUROPEAN PATENT APPLICATION

(11) **EP 4 335 940 A1**
(43) Date of publication of application: **13.03.2024**
(21) Application number: 22824285.5
(22) Date of filing: 16.06.2022
(51) Int. Cl.: C22B 34/22, C22B 1/02, C22B 34/12, C22B 5/12, C22B 1/242, C21B 13/02

(54) **STRAIGHT GRATE-BASED PRE-REDUCED PELLET PREPARATION DEVICE AND METHOD**

(30) Priority: 18.06.2021 CN 202110676087
(71) Applicant: BAOSHAN IRON & STEEL CO., LTD., Shanghai 201900 (CN)
(72) Inventor: LI, Jian, Shanghai 201900 (CN); MAO, Xiaoming, Shanghai 201900 (CN); XU, Wanren, Shanghai 201900 (CN); XIONG, Lin, Shanghai 201900 (CN); XU, Haifa, Shanghai 201900 (CN); SHEN, Haijia, Shanghai 201900 (CN); LIU, Siyang, Shanghai 201900 (CN); LIU, Feng, Shanghai 201900 (CN); YOU, Yifeng, Shanghai 201900 (CN)
(74) Representative: Nederlandsch Octrooibureau
(86) International application number: PCT/CN2022/099170
(87) International publication number: WO 2022/262812

(57) **Abstract**

Disclosed is pre-reduced pellet preparation device and method, wherein the pre-reduced pellet preparation device comprises a belt type roasting machine system and a hydrogen-based shaft furnace reduction system. By organically combining roasting process and reduction process of iron-containing green pellets, eliminating pellet-cooling process after roasting and pellet heating process before reduction, and using the physical heat of roasted pellets to provide the heat required for the heating process and reduction process, the pre-reduced pellet preparation method solves the technical problems such as low hydrogen utilization rate of traditional direct reduction process, high energy consumption of oxidizing-roasting process and direct reduction process, and uneven pellet quality resulting from uneven heat applied on the pellets in upper and lower material layers of a traditional belt type roasting machine for pellet oxidation in a high-temperature state, and the prepared pre-reduced pellets serve as blast furnace burden, and therefore, fuel consumption and carbon emissions in a traditional steel process is significantly reduced and a favorable condition for the green development of traditional processes is created.

## Description

### TECHNICAL FIELD

The present disclosure belongs to pre-treatment technology of ferrous metallurgical raw materials in the field of iron and steel smelting, in particular, to a pre-reduced pellet preparation device and method.

### BACKGROUND

Iron and steel production in China is mainly based on long process using blast furnace-converter. Due to the limitation of process characteristics, a large amount of fossil energy, mainly coal, is needed, thus a large amount of greenhouse gases is emitted. According to a statistics, carbon dioxide emissions from iron and steel production in China account for 15% of the total carbon dioxide emissions in China, so the iron and steel industry is an industry with large greenhouse gas emissions; with the development of global industrialization, climate issues caused by concentrated emission of greenhouse gases are increasingly attracting attention. As a signatory of the *Paris Agreement,* China has always attached importance to climate change, Chinese government promises to strive for carbon peaking by 2030 and achieving carbon neutrality by 2060.

As an important process in the whole process, the energy consumption and carbon emission of ironmaking account for 70-80% of the whole process. Therefore, how to reduce the carbon emission of the ironmaking process is the key to realizing the green development of the iron and steel industry. It is generally believed in the industry that use of hydrogen reduction instead of carbon reduction is an important technical direction for reducing carbon emissions. Because hydrogen utilization rate in a blast furnace is low (≤30%), direct reduction with hydrogen-rich gas has become a key technical direction.

According to the statistics of Midrex Technologies, Inc., in 2019, the global direct reduced iron production exceeded 100 million tons for the first time, reaching 108.1 million tons, an increase of 7.3% over 2018, wherein the output of gas-based shaft furnace process accounts for 74.1%, coal-based rotary kiln process accounts for 24%, and other processes account for 1.9%; in the existing direct reduction process, oxidized pellets are usually used as iron-containing raw materials, and coal, natural gas or steel plant gas are used as reducing agents and heating agents. The oxidized pellets are heated to 820-1050 °C, and then reduced to obtain metallized pellets or hot pressed iron blocks, which can be used for electric furnaces, converters or blast furnaces. A related patent is as follows: Chinese patent CN103261446B discloses a method and device for producing direct reduced iron by using a reducing gas source containing hydrogen and CO, the direct reduced iron (DRI) is produced by using highly oxidized (CO₂ and H₂O) reducing gas containing CO and hydrogen and prepared from coal gas. The process breaks through the limitation of using natural gas in previous gas-based direct reduction shaft furnaces.

Chinese patent CN 103608468B discloses a system and method for reducing iron oxide to metallic iron by using coke oven gas and oxygen steelmaking furnace gas, so that coal gas generated in a long-process of an iron and steel enterprises can be used to produce direct reduced iron, thus solving bottlenecks in developing direct reduced iron in natural gas-deficient areas.

Chinese laid-open patent application CN105408500A discloses a method for reducing iron oxide to metallic iron by using natural gas, which converts purified or raw natural gas, purified or contaminated coke oven gas, etc., to reducing gas/synthesis gas suitable for direct reduction with minimal treatment or purification wherein hydrocarbons and the like are converted to H₂ and CO through reduction. Its typical feature is that iron oxide is added into a shaft furnace at room temperature, and gas is converted and heated to a reducing gas, and heat required for the reaction is provided. In order to solve the problem of low utilization rate, purifying, heating and circulation are carried out for many times in a cyclic manner.

Chinese patent CN103898265B discloses a systematic device and method for directly reducing iron ore by modifying coke oven gas. The coke oven gas generated in a coking process is modified and converted to hydrogen-rich reducing gas (H2 and CO), which is then introduced into a shaft furnace for directly reducing iron ore. This technology can reduce carbon dioxide emission in a process of iron ore reduction, which is different from a route of direct reduction of iron ore with natural gas, and can better adapt to China's energy resource characteristics.

Chinese laid open patent application CN110484672A discloses a method for producing direct reduced iron in a gas-based shaft furnace, and the method use the Boudouard reaction of crushed coke under blast furnace screen and CO₂ to absorb heat. The method can effectively reduce the temperature in the shaft furnace, reduce the generation of hot caking of burden, effectively utilize the exothermic energy of reduction, and improve the overall energy utilization rate. The generated CO increases the reduction potential inside the furnace, and promotes the reduction of iron ore, which is conducive to promoting the technology of direct reduction of iron ore in a gas-based shaft furnace. Its iron ore is pellet or lump ore, or a mixture of the pellet and the lump ore. The above technology uses shaft furnace as a reduction device, which has the advantages of large capacity and high efficiency. After iron ore is added into a furnace at room temperature, the iron ore exchanges heat with high temperature reducing gas , is heated up and reaches the temperature required for reduction, and is gradually reduced to a higher metallization rate, and then is used as raw material of electric furnace and matched with scrap steel to obtain molten steel. However, there are inherent thermodynamic limitations in this kind of treatment method, mainly due to large specific heat capacity of iron oxide. In addition, after reforming with natural gas or coke oven gas, hydrogen is mainly used as reducing agent, so it is difficult to maintain reduction temperature, and it is necessary to heat and circulate the gas for many times. In the whole process, the utilization rate of hydrogen is relatively low, usually around 30%. This makes it difficult to promote the gas-based direct reduction process worldwide, but only develop in Middle East countries and South American countries where the price of natural gas is cheap.

There are also some researchers who have made innovations in distribution and heating methods: Chinese patent CN107304460B discloses an iron ore pre-reducing and sintering method and device, wherein improvements of traditional sintering process are made and the method includes: 1) preparation of a traditional mixture: compounding iron ore powder, flux and fuel, and then mixing and granulating to obtain a traditional mixture; 2) preparation of a pre-reduced mixture: uniformly mixing iron ore powder, additives and fuel, and pelletizing them to obtain pellets with carbon inside, and then placing the pellets with carbon inside in a drum mixer, adding fuel fine powder and quicklime or slaked lime, and coating and granulating to obtain the pre-reduced mixture; 3) distribution: placing the pre-reduced mixture prepared in step 2) on a sintering machine pallet in advance by adopting a double-layer distribution mode, and placing the traditional mixture prepared in step 1) on the pre-reduced mixture; 4) sintering: igniting to make the traditional mixture and the pre-reduced mixture sintered in a flue gas circulating manner on a sintering machine. The method solves the problem that high CO flue gas is difficult to be treated, and reduces the re-oxidation of the pre-reduced sinter in the reduction process, improves the combustion atmosphere between material layers, increases the temperature of the materials of the mixtures and accelerates the reduction reaction of iron ore materials. Chinese patent CN103290159B discloses a method for producing direct reduced iron powder by microwave heating, which includes: providing 60-73% iron raw material, 22-30% coal char reductant, 3-7% desulfurizer and 2-3% bentonite; adding water for mixing, pelletizing and sieving to obtain green pellets with a diameter of 10-15 mm; drying the green pellets and transferring the dried green pellets to a microwave heating furnace to be heated to 1050-1150 °C and reduced for 160-180 min to obtain metallized pellets; crushing and grinding the metallized pellets to fine powder with a particle size of less than 0.2 mm; performing magnetic separation to obtain direct reduced iron powder. This technology overcomes the disadvantages, such as long reduction time, difficulty in control of product quality, large investment, large occupation area in a process of producing direct reduced iron by carbon distribution outside a coal-based tunnel kiln. However, the industrial microwave oven in this technology is charged with material tray, and the production is intermittent, and the production efficiency is not introduced.

Chinese laid-open patent CN112159880A discloses a method and a device for hydrogen-based ironmaking wherein iron-containing green pellets are used for hydrogen-rich or pure hydrogen smelting with microwave irradiation in hydrogen or hydrogen-rich gas atmosphere to obtain direct reduced iron. In this technical solution, microwave is used as a heat source, and pure hydrogen or hydrogen-rich gas is used as a reducing agent, a sample is placed in a crucible, and a kg-scale microwave oven is used as a core equipment, so the treatment scale is limited. By utilizing distribution or using microwave as a heat source, these technologies can solve the disadvantages of mutual interference between heating and reduction and difficulty in control in traditional reduction processes. However, these technical solutions still implement the above two functions on the same set of equipment, there are still great challenges in the reliability, production scale and continuity of process, which affects the implementation and application of the above technical solutions.

In view of the above situation, it is urgent for the industry to study new pellet sintering-reduction technology, which can solve the technical problems of traditional pellet direct reduction processes, such as low hydrogen utilization rate, high energy consumption caused by repeated heating of pellets such as heating (about 1250°C), cooling (about 25°C) and reheating (820-1050°C) in oxidizing roasting and direct reduction processes, and uneven pellet quality resulting from unevenly heating of pellets in the upper and lower material layers of a traditional belt roasting machine for pellet oxidation in a high-temperature state.

### SUMMARY

Aiming at the above-mentioned problems in the prior art, an objective of the present disclosure is to provide a pre-reduced pellet preparation device and method wherein roasting of iron-containing green pellets and reduction of pellets are combined organically to eliminate pellet cooling process after roasting and pellet heating process before reduction, and the physical heat of the roasted pellets is used to meet the heat required for the reduction process. The pre-reduced pellet preparation device and method solve the technical problems, such as low hydrogen utilization rate in traditional direct reduction processes, high energy consumption in the direct reduction process, and uneven pellet quality resulting from uneven heating of pellets in the upper and lower material layers of a traditional belt type roasting machine for pellet oxidation in a high-temperature state. The prepared pre-reduced pellets serve as charge of blast furnace/converter/electric furnace, such that fuel consumption and carbon emissions in traditional steel processes are significantly reduced and favorable conditions for green development of the traditional processes are created.

In order to achieve the above objective, the present disclosure provides the following technical solutions:
a first aspect of the present disclosure provides a pre-reduced pellet preparation device, including a belt type roasting machine system and a hydrogen-based shaft furnace reduction system; wherein
the belt type roasting machine system is sequentially provided with drying section I, drying section II, preheating section I, preheating section II and a roasting section in a moving direction of iron-containing green pellets, and in the belt type roasting machine system, the iron-containing green pellets are sequentially dried and preheated to obtain preheated pellets, and the preheated pellets are roasted at a temperature of 1170-1270 °C in the roasting section to obtain roasted pellets; the roasting section utilizes microwave electric heating;
the hydrogen-based shaft furnace reduction system includes a hydrogen-based shaft furnace, a feeding system, a reducing gas system, a cooling system and a discharging system; the feeding system is arranged above the hydrogen-based shaft furnace, and the roasted pellets from the belt type roasting machine system are directly conveyed into the feeding system; the reducing gas system treats flue gas from the hydrogen-based shaft furnace, and provides reducing gas required for reduction treatment to the hydrogen-based shaft furnace; the roasted pellets from the feeding system are reduced in the hydrogen-based shaft furnace to obtain pre-reduced pellets; the cooling system performs cooling treatment on the pre-reduced pellets from the hydrogen-based shaft furnace to obtain cooled pre-reduced pellets;
the discharging system is arranged at the bottom of the hydrogen-based shaft furnace and discharges the cooled pre-reduced pellets.

Preferably, the preheating section II utilizes fuel for heating and communicates with the drying section II through a first heat recuperation fan;
the preheating section I is connected with a tubular heat exchanger of the reducing gas system and is connected with the preheating section II through a combustion fan, and the preheating section I is further connected with the drying section I through a second heat recuperation fan;
both the drying section I and the drying section II are connected to a bag filter through a main exhaust fan.

Preferably, the feeding system includes an upper hopper, a middle hopper and a lower hopper; valves are arranged between the upper hopper and the middle hopper as well as between the middle hopper and the lower hopper; and/or
the reducing gas system includes a tubular heat exchanger, a waste heat boiler, a first scrubber, a circulating fan and a pressurizing fan; the tubular heat exchanger is provided with a flue gas inlet, a flue gas outlet, an air inlet and an air outlet, the flue gas inlet is connected with a flue gas port on the top of the hydrogen-based shaft furnace, the flue gas outlet is connected with the waste heat boiler, the air inlet is connected with a heat exchange fan, and the air outlet is connected with the preheating section I of the belt type roasting machine system; an air outlet of the waste heat boiler is connected with an air inlet of the first scrubber; one end of the circulating fan is connected to an air outlet of the first scrubber, and the other end communicates with an annular tuyere in the middle of the hydrogen-based shaft furnace; the pressurizing fan pressurizes reducing gas from the circulating fan; and/or
the cooling system includes an oxygenating combustion unit, a waste heat recovery unit, a second scrubber and a cooling fan; the oxygenating combustion unit is connected with an air outlet at the lower part of the hydrogen-based shaft furnace; one end of the waste heat recovery unit is connected with the oxygenating combustion unit, and the other end is connected with an air inlet of the second scrubber; one end of the cooling fan is connected with an air outlet of the second scrubber, and the other end communicates with an air inlet at the lower part of the hydrogen-based shaft furnace; the air outlet at the lower part of the hydrogen-based shaft furnace is arranged above the air inlet at the lower part of the hydrogen-based shaft furnace.

Preferably, the upper hopper is provided with a ventilation pipe; the middle hopper is provided with a pressure equalizing device; the lower hopper is provided with a universal distributor.

A second aspect of the present disclosure provides a pre-reduced pellet preparation method, wherein the pre-reduced pellet preparation method uses the pre-reduced pellet preparation device according to the first aspect of the present disclosure, roasts the pellets at a temperature of 1170-1270 °C in the belt type roasting machine system of the pre-reduced pellet preparation device to obtain roasted pellets, and then directly feeds the roasted pellets into the hydrogen-based shaft furnace reduction system of the pre-reduced pellet preparation device for reduction to obtain pre-reduced pellets.

Preferably, the pre-reduced pellet preparation method includes the following steps:
(1) adding bentonite and finely ground limestone/slaked lime into an iron ore raw material to obtain a mixed material, and then mixing water into the mixed material for pelletizing to obtain iron-containing green pellets;
(2) placing the iron-containing green pellets into the belt type roasting machine system to form a material layer of the iron-containing green pellets, subjecting the material layer of the iron-containing green pellets to blast drying, exhaust drying, primary preheating and secondary preheating in sequence to obtain preheated pellets, and then roasting the preheated pellets at a temperature of 1170-1270 °C using microwave electric heating to obtain roasted pellets; and
(3) feeding the roasted pellets into the hydrogen-based shaft furnace reduction system so that the roasted pellets undergo a reduction reaction with reducing gas and then are subjected to cooling treatment by cooling gas to obtain pre-reduced pellets.

Preferably, in the step (1), the iron ore raw material is selected from one or more of magnetite, hematite and limonite; and/or
the Blaine specific surface area of the iron ore raw material is greater than or equal to 1500 cm²/g; and/or
addition amount of the bentonite is added in an amount of 0.7-1.5 wt% of the iron ore raw material; and/or
the binary basicity of the mixed material is 0.3-0.5 or 0.8-1.2; and/or
the particle size of the iron-containing green pellets is 8-20 mm; and/or
in the step (2), the belt type roasting machine system is a belt type roasting machine system laid with a bed charge having a thickness of 80-100 mm, and after the iron-containing green pellets are charged into the belt type roasting machine system, a material layer with a total height of 300-400 mm is formed; and/or
the blast drying is carried out in the drying section I of the belt type roasting machine system, at a temperature of 170-240 °C, and an air velocity of 0.8-1.4 m/s for a time of 1.5-2.5 min; and/or
the exhaust drying is carried out in the drying section II of the belt type roasting machine system, at a temperature of 300-400 °C, and an air velocity of 0.8-1.4 m/s for a time of 4-6 min; and/or
the primary preheating is performed in the preheating section I of the belt type roasting machine system, at a temperature of 600-800 °C, and an air velocity of 0.8-1.4 m/s for a time of 4-6 min; and/or
the secondary preheating is performed in the preheating section II of the belt type roasting machine system, at a temperature of 900-1100 °C, and an air velocity of 0.8-1.4 m/s for a time of 4-6 min; and/or
the fuel for the secondary preheating includes natural gas, coke oven gas, pyrolysis gas, pyrolysis oil, biomass oil, or biomass carbon; and/or
the secondary preheating utilizes hot air for combustion supporting, wherein the hot air is a mixture of air and hot waste gas from the preheating section I; and/or
in the step (1), when the iron ore raw material contains magnetite, air is added above the mixed material such that oxygen content is controlled to be greater than 14%; and/or
in the process of the roasting roasting temperature is 1170-1270 °C, and roasting time is 8-12 min; and/or
in the step (3), a pressure of the hydrogen-based shaft furnace of the hydrogen-based shaft furnace reduction system is 200-250 kPa; and/or
the reducing gas is pure hydrogen or coke oven gas; and/or
during the reduction reaction, consumption amount of the reducing gas is 800-1200 m³/t, and reduction reaction time is 40-100 min; and/or
the cooling gas includes nitrogen and natural gas; and/or
during the cooling treatment, a flow rate of the cooling gas is 1200-1800 m³/t; and/or
the pre-reduced pellets is discharged at temperature of lower than 150 °C; and/or
the pre-reduced pellets has a metallization rate of greater than or equal to 40%.

Preferably, in the step (2), in the process of the blast drying, the temperature of the blast drying is 190-210 °C, and the air velocity is 0.9-1.2 m/s; and/or
in the process of the exhaust drying, the temperature of the exhaust drying is 330-350 °C, and the air velocity is 0.9-1.2 m/s; and/or
in the process of the primary preheating, the air velocity is 0.9-1.2 m/s; and/or
in the process of the secondary preheating, the air velocity is 0.9-1.2 m/s; and/or
in the step (3), the metallization rate of the pre-reduced pellets is 40-66%; and/or
the reducing gas is pure hydrogen, and during the reduction reaction, hydrogen utilization rate reaches 50% or more.

Preferably, in the step (3), the reducing gas is pure hydrogen, and during the reduction reaction, the hydrogen utilization rate reaches 60% or more; and/or
the roasted pellets are conveyed into the feeding system of the hydrogen-based shaft furnace reduction system through a high-temperature-resistant charging bucket, and are then distributed into the hydrogen-based shaft furnace of the hydrogen-based shaft furnace reduction system by the feeding system to participate in the reduction reaction in the middle of the hydrogen-based shaft furnace;
the reducing gas enters the hydrogen-based shaft furnace through the reducing gas system to participate in the reduction reaction, and flue gas after the reaction enters the reducing gas system from the flue gas outlet on the top of the hydrogen-based shaft furnace, and is subjected to heat exchange, waste heat recovery and scrubbing, and then enters the middle of the hydrogen-based shaft furnace to participate in the reduction reaction;
the cooling gas enters the hydrogen-based shaft furnace through the cooling system to participate in the cooling treatment, and mixed gas after the treatment enters the cooling system from the air outlet at the lower part of the hydrogen-based shaft furnace, and is subjected to oxygenating combustion, waste heat recovery and scrubbing, and then enters the lower part of the hydrogen-based shaft furnace to participate in the cooling treatment.

Preferably, in the step (3), distribution is performed in the feeding system as follows:
after the roasted pellets enter the feeding system, the roasted pellets pass through the upper hopper, the middle hopper and the lower hopper of the feeding system in sequence and then are distributed into the hydrogen-based shaft furnace through the universal distributor;
after the roasted pellets are charged into the upper hopper, steam or nitrogen is introduced for replacing oxygen to ensure that the oxygen content in the upper hopper is smaller than or equal to 1%, then the valve below the upper hopper is opened, after the roasted pellets completely enter the middle hopper, the valve below the upper hopper is closed, a pressure equalization process is completed by using gas having the same composition as the top gas in the hydrogen-based shaft furnace, after the pressure equalization is completed, the valve below the middle hopper is opened, after the roasted pellets completely enter the lower hopper, the valve below the middle hopper is closed, and the valve below the lower hopper is opened for distributing the roasted pellets into the hydrogen-based shaft furnace.

The beneficial effects of the present disclosure are:
1) by organically combining roasting of iron-containing green pellets and reduction of pellets, eliminating pellet cooling process after roasting and pellet heating process before reduction, and using physical heat of roasted pellets to meet the heat required for reduction process, the pre-reduced pellet preparation device and method solve the technical problems, such as low hydrogen utilization rate in traditional direct reduction processes, high energy consumption in direct reduction process, and uneven pellet quality resulting from unevenly heating of the pellets in upper and lower material layers of a traditional belt type roasting machine for pellet oxidation in a high-temperature state; the prepared pre-reduced pellets serve as charge of a blast furnace/converter/electric furnace, such that fuel consumption and carbon emissions in traditional steel processes are significantly reduced and favorable conditions for green development of traditional processes are created;
2) by organically combine roasting process of iron-containing green pellets and reduction of pellets and eliminating pellet cooling process and heating process of the reduction, the pre-reduced pellet preparation device and method provided by the present disclosure utilize pure hydrogen or hydrogen-rich gas for cooling and reduction, so that processing is simpler and energy utilization efficiency is improved;
3) the pre-reduced pellet preparation device and method provided by the present disclosure utilize physical heat of roasted pellets to meet the heat required for hydrogen reduction and gas temperature rising, so that the thermodynamic condition of hydrogen reduction is more reasonable, and hydrogen utilization rate can be greatly improved;
4) the pre-reduced pellet preparation device and method provided by the present disclosure take advantage of the characteristics of microwave, such as deep penetration, good temperature uniformity and integral heating for pellet roasting, so that the kinetic conditions of hydrogen reduction of pellets are better, which is beneficial to improving the quality of pre-reduced pellets and increasing the speed of reduction reaction;
5) the pre-reduced pellet preparation device and method provided by the present disclosure by utilize microwave electric heat to roast the iron-containing pellets, so as to reduce roasting temperature of the pellets, reduce the generation of NOx type pollutants in the pre-oxidized pellet preparation process, and are more environmentally friendly;
6) in the pre-reduced pellet preparation device and method provided by the present disclosure, the whole process utilizes non-fossil energy sources such as pyrolysis gas, pyrolysis oil, and biomass oil for combustion, and green electricity is utilized for microwave electric heating, and pure hydrogen or hydrogen-rich gas is adopted for reduction, so that the pre-reduced pellets can be produced by a carbon-free or low carbon process; and
7) the pre-reduced pellet preparation device and method provided by the present disclosure uses the physical heat of the roasted pellets to meet the heat required for hydrogen reduction and heating, so that the roasting and reduction processes of iron-containing pellets are simplified, the hydrogen utilization rate is improved, and the prepared pre-reduced pellets can be used as blast furnace charge, the fuel consumption and carbon emission of the blast furnace can therefore be greatly reduced, and the method is a new low-carbon and green pre-reduced pellet preparation process.

### BRIEF DESCRIPTION OF THE DRAWINGS

Other features, objects and advantages of the present disclosure will become more apparent upon reading the detailed description of non-limiting embodiments with reference to the following drawing:

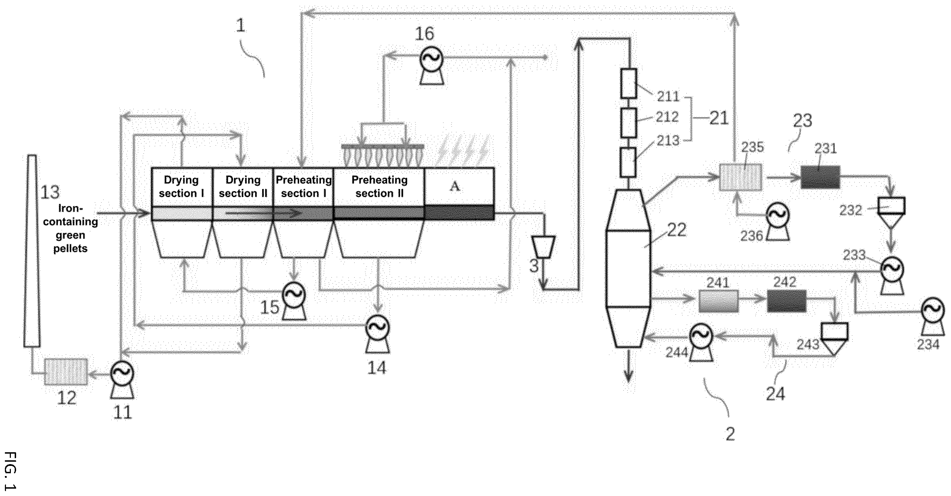

FIG. 1 is a structural schematic diagram of a belt type roasting machine-based pre-reduced pellet preparation device of the present disclosure.

### DETAILED DESCRIPTION

In order to better understand the above technical solutions of the present disclosure, the technical solutions of the present disclosure will be further illustrated below in conjunction with the accompanying drawing and embodiments.

Referring to FIG. 1, a pre-reduced pellet preparation device provided by the present disclosure includes a belt type roasting machine system 1 and a hydrogen-based shaft furnace reduction system 2;
referring to FIG. 1, the belt type roasting machine system 1 is used for sequentially drying, preheating and roasting iron-containing green pellets; the belt type roasting machine system 1 is sequentially provided with drying section I, drying section II, preheating section I, preheating section II and roasting section A in the moving direction of the iron-containing green pellets; wherein the roasting section A adopts microwave electric heating, in a preferred embodiment, the preheating section II adopts fuel for heating, and the preheating section II communicates with the drying section II through a first heat recuperation fan 14; the preheating section I is connected with a tubular heat exchanger 235 of a reducing gas system 23, the preheating section I is connected with the preheating section II through a combustion fan 16, and the preheating section I is connected with the drying section I through a second heat recuperation fan 15; the drying section I and the drying section II are connected with a bag filter 12 through a main exhaust fan 11. The roasted pellets obtained after roasting by the belt type roasting machine system 1 are conveyed into a feeding system 21 of the hydrogen-based shaft furnace reduction system 2 through a high-temperature-resistant charging bucket 3.

Referring to FIG. 1, the hydrogen-based shaft furnace reduction system 2 includes a hydrogen-based shaft furnace 22, a feeding system 21, a reducing gas system 23, a cooling system 24 and a discharging system, and is used for reducing the roasted pellets obtained by roasting by the belt type roasting machine system 1; the feeding system 21 is arranged above the hydrogen-based shaft furnace 22 and receives the roasted pellets from the high-temperature-resistant charging bucket 3; the reducing gas system 23 provides reducing gas required for the reduction reaction to the hydrogen-based shaft furnace 22, and can additionally treat flue gas generated by the reduction reaction in the hydrogen-based shaft furnace 22; the roasted pellets from the feeding system 21 are reduced in the hydrogen-based shaft furnace 22 to obtain pre-reduced pellets; the cooling system 24 provides cooling gas required for cooling treatment, and is used for performing cooling treatment on the pre-reduced pellets to obtain cooled pre-reduced pellets, and additionally can treat mixed gas generated after cooling; the discharging system is arranged at the bottom of the hydrogen-based shaft furnace 22 and is used for discharging the cooled pre-reduced pellets.

Referring to FIG. 1, the feeding system 21 includes an upper hopper 211, a middle hopper 212 and a lower hopper 213; in orderto maintain a closed environment within each hopper, valves are arranged between the upper hopper 211 and the middle hopper 212 as well as between the middle hopper 212 and the lower hopper 213; in a specific embodiment, after the upper hopper 211 is charged with the roasted pellets (in a temperature between 1170 °C and 1270 °C, e.g., about 1200 °C), in order to ensure that the oxygen content in the upper hopper 211 is ≤1%, the upper hopper 211 is further provided with a ventilation pipe through which steam (preferably at high temperature and high pressure) or nitrogen (preferably at high temperature and high pressure) can be conveniently introduced to replace the oxygen in the air. In order to ensure pressure equalization in the middle hopper, the middle hopper 212 is provided with a pressure equalizing device which can use gas having the same composition as the top gas in the shaft furnace to complete the pressure equalizing process. In order to conveniently distribute the roasted pellets into the hydrogen-based shaft furnace 22, the lower part of the lower hopper 213 is provided with a universal distributor.

Referring to FIG. 1, the reducing gas system 23 is used for providing reducing gas required for the reduction reaction to the hydrogen-based shaft furnace 22 and includes a tubular heat exchanger 235, a waste heat boiler 231, a first scrubber 232, a circulating fan 233 and a pressurizing fan 234; the tubular heat exchanger 235 is provided with a flue gas inlet, a flue gas outlet, an air inlet and an air outlet, wherein the flue gas inlet is connected with a flue gas port at the top of the hydrogen-based shaft furnace 22, and the flue gas outlet is connected with the waste heat boiler 231; the air inlet is connected with a heat exchange fan 236, and the air outlet is connected with the preheating section I of the belt type roasting machine system 1; the other end of the waste heat boiler 231 is connected with an air inlet of the first scrubber 232; one end of the circulating fan 233 communicates with an air outlet of the first scrubber 232, and the other end communicates with an annular tuyere in the middle of the hydrogen-based shaft furnace 22; the pressurizing fan 234 pressurizes the reducing gas from the circulating fan 233; in practical use, the reducing gas enters the hydrogen-based shaft furnace 22 from the annular tuyere of the hydrogen-based shaft furnace 22, makes contact with the roasted pellets from the feeding system 21 in the middle of the hydrogen-based shaft furnace 22, while being heated by the roasted pellets (absorbing heat from the roasted pellets and cooling the roasted pellets), the reducing gas undergoes a reduction reaction with the roasted pellets. Flue gas after the reaction comes out of the flue gas outlet at the top of the hydrogen-based shaft furnace 22, and is subjected to heat exchange in the tubular heat exchanger 235, waste heat recovery in the waste heat boiler 231 and scrubbing in the first scrubber 232, and then passes through the annular tuyere under the action of the circulating fan 233 and the pressurizing fan 234 to participate in the reduction reaction.

Referring to FIG. 1, the cooling system 24 includes an oxygenating combustion unit 241, a waste heat recovery unit 242, a second scrubber 243 and a cooling fan 244; the oxygenating combustion unit 241 is connected with an air outlet at the lower part of the hydrogen-based shaft furnace 22; one end of the waste heat recovery unit 242 is connected with the oxygenating combustion unit 241, and the other end is connected with an air inlet of the second scrubber 243; one end of the cooling fan 244 is connected with an air outlet of the second scrubber 243, and the other end communicates with an air inlet at the lower part of the hydrogen-based shaft furnace 22; wherein the air outlet at the lower part of the hydrogen-based shaft furnace is arranged above the air inlet at the lower part of the hydrogen-based shaft furnace; in practical use, cooling gas enters the hydrogen-based shaft furnace 22 from the air inlet at the lower part of the hydrogen-based shaft furnace 22, and cools the pre-reduced pellets after the reduction reaction at the lower part of the hydrogen-based shaft furnace 22, and mixed gas having being cooled is subjected to oxygenating combustion in the oxygenating combustion unit 241, waste heat recovery in the waste heat recovery unit 242, and scrubbing in the second scrubber 243, and then passes through the air inlet at the lower part of the hydrogen-based shaft furnace 22 under the action of the cooling fan 244 to participate in the cooling treatment.

The discharging system is used for discharging the cooled pre-reduced pellets.

Referring to FIG. 1, the belt type roasting machine-based pre-reduced pellet preparation method provided by the present disclosure uses the above pre-reduced pellet preparation device and includes: charging iron-containing green pellets into the belt type roasting machine system 1, roasting the iron-containing green pellets by microwave electric heating, and then directly feeding the roasted iron-containing green pellets into the hydrogen-based shaft furnace reduction system for reduction. For specific, the method includes the following steps:
(1) adding bentonite and finely ground limestone/slaked lime into an iron ore raw material to obtain a mixed material, and then mixing water into the mixed material for pelletizing to obtain iron-containing green pellets;
   wherein one or more of magnetite, hematite and limonite having a Blaine specific surface area ≥1500cm²/g and pretreated by ball milling or high-pressure roll milling is/are mixed to obtain an iron ore raw material, and then bentonite and finely ground limestone or slaked lime is added to obtain a mixed material with binary basicity (CaO/SiO₂) of 0.3-0.5 or 0.8-1.2, wherein the addition amount of bentonite is 0.7-1.5 wt% of the iron ore raw material, and the binary basicity of the mixed material is adjusted by finely ground limestone or slaked lime according to actual use situation; then an appropriate amount of water for pelletizing is added by a balling disc or a balling drum to obtain iron-containing green pellets having a particle size grade of 8-20 mm;
(2) charging the iron-containing green pellets into the belt type roasting machine system 1, sequentially subjecting the iron-containing green pellets to blast drying, exhaust drying, primary preheating and secondary preheating to obtain preheated pellets, and then roasting the preheated pellets by means of microwave electric heating at a high temperature of 1170-1270 °C to obtain roasted pellets;
   wherein the iron-containing green pellets prepared in step (1) are placed on a pallet of the belt type roasting machine system 1 in which bed charge is laid such that the thickness of the bed charge is controlled to be 80-100 mm, and a material layer with a total height of 300-400 mm after the iron-containing green pellets being charged is formed; then the iron-containing green pellets are sequentially passed through the drying section I, the drying section II, the preheating section I and the preheating section II of the belt type roasting machine system 1 and subjected to blast drying, exhaust drying, primary preheating and secondary preheating to obtain preheated pellets, and then the preheated pellets are roasted by means of microwave electric heating in the roasting section A of the belt type roasting machine system 1;
   and wherein the blast drying is carried out in the drying section I, utilizes hot waste gas from the preheating section I and blasts it from the bottom of the material layer into the iron-containing green pellets by using the second heat recuperation fan 15, at a temperature controlled to be 170-240 °C, preferably 190-210 °C, and an air velocity of 0.8-1.4 m/s, preferably 0.9-1.2 m/s, for a time of 1.5-2.5 min;
   and wherein the exhaust drying is carried out in the drying section II, utilizes hot waste gas from the preheating section II and guides it above the material surface by using the first heat recuperation fan 14, wherein the temperature of the exhaust drying is adjusted according to green pellet bursting temperature and controlled below the pellet bursting temperature, usually 300-400 °C, preferably 330-350 °C, with an air velocity of 0.8-1.4 m/s, preferably 0.9-1.2 m/s, for a time of 4-6 min;
   and wherein the primary preheating is carried out in the preheating section I, utilizes hot air from the heat exchange fan 236 obtained by heat exchange in the tubular heat exchanger 235 of the reducing air system 23, at a temperature of 600-800 °C, an air velocity of 0.8-1.4 m/s, preferably 0.9-1.2 m/s, for a time of 4-6 min;
   and wherein the secondary preheating is carried out in the preheating section II, utilizes hot air obtained by fuel combustion, wherein the fuel may be combustible oil or combustible gas, including natural gas, coke oven gas, pyrolysis gas, pyrolysis oil, biomass oil or biomass carbon, the fuel is preferably a gas from a non-fossil source of energy, such as pyrolysis gas, pyrolysis oil or biomass oil. In order to increase combustion temperature, hot air is introduced for combustion supporting and is a mixture of air and hot waste gas from the preheating section I, the secondary preheating is carried out at a temperature controlled to be 900-1100 °C, an air velocity of 0.8-1.4 m/s, preferably 0.9-1.2 m/s, for a time of 4-6 min; and
   and wherein the high-temperature roasting is carried out in the roasting section A, and microwave electric heating is adopted, so that there is no airflow penetrating into the material layer, so as to keep high-temperature state in the material layer; when magnetite is added into the iron-containing green pellets, a small amount of air needs to be added above the material layer to ensure the complete oxidation of magnetite, such that oxygen content is greater than 14%; by using the strong microwave absorbing property and microwave penetrability of iron oxides, the temperature of the iron-containing green pellets can rise rapidly during the roasting process, and the temperature uniformity inside and outside the iron-containing pellets and at the upper, middle and lower parts of the material layer is better, the temperature of the roasting is controlled to be 1170-1270 °C, preferably 1250-1270 °C, at a time of 5-10 min, the cold-state compressive strength of the roasted pellets (sinter or agglomerate) is ≥2200 N/number, and the microwave power is adjusted, thereby adjusting the temperature and the time of the roasting; in the belt type roasting machine system 1, after the iron-containing green pellets are subjected to blast drying and exhaust drying, waste gas passes through the main exhaust fan 11, the bag filter 12 and a dust removal, desulfurization and denitrification system to meet the ultra-low emission standard, and is then discharged through a chimney 13; and
(3) introducing the roasted pellets into the hydrogen-based shaft furnace reduction system 2 to undergo a reduction reaction with reducing gas and then subjecting them to cooling treatment using cooling gas to obtain pre-reduced pellets: introducing the roasted pellets into the feeding system 21 of the hydrogen-based shaft furnace reduction system 2 through the high-temperature-resistant charging bucket, and then to the hydrogen-based shaft furnace 22 of the hydrogen-based shaft furnace reduction system 2 through the feeding system 21 to undergo a reduction reaction in the middle of the hydrogen-based shaft furnace 22 and subjecting them to cooling treatment at the lower part of the hydrogen-based shaft furnace 22 after the reduction reaction to obtain cooled pre-reduced pellets; wherein flue gas after the reduction reaction is introduced to the reducing gas system 23 from the flue gas outlet at the top of the hydrogen-based shaft furnace 22, and is subjected to heat exchange, waste heat recovery and scrubbing and then enters the middle of the hydrogen-based shaft furnace 22 through the reducing gas system 23 to participate in the reduction reaction; mixed gas having be cooled is introduced into the cooling system 24 from the air outlet at the lower part of the hydrogen-based shaft furnace 22, and subjected to oxygenating combustion, waste heat recovery and scrubbing and then enters the lower part of the hydrogen-based shaft furnace 22 through the cooling system 24 to participate in the cooling treatment;
   for details, the step (3) comprises the following substeps:
   (3.1) distributing: the roasted pellets prepared in the step (2) is introduced into the feeding system 21 of the hydrogen-based shaft furnace reduction system 2 through the high-temperature-resistant charging bucket, and pass through the upper hopper 211, the middle hopper 212 and the lower hopper 213 of the feeding system 21 in sequence, and then are distributed into the hydrogen-based shaft furnace 22, wherein in this process, after the roasted pellets are charged into the upper hopper 211, steam (preferably at high temperature and high pressure) or nitrogen (preferably at high temperature and high pressure) is introduced for replacing oxygen to ensure that the oxygen content in the upper hopper 211 is ≤1%, and then the valve below the upper hopper 211 is opened, after the roasted pellets completely enter the middle hopper 212, the valve below the upper hopper 211 is closed, pressure equalization process is completed using gas having the same composition as the top gas in the hydrogen-based shaft furnace 22, and after the pressure equalization is completed, the valve below the middle hopper 212 is opened, and after the roasted pellets completely enter the lower hopper 213, the valve below the middle hopper 212 is closed, the valve below the lower hopper 213 is opened, and the roasted pellets are distributed into the hydrogen-based shaft furnace 22 through the universal distributor; and
   (3.2) reduction reaction: the roasted pellets undergo the reduction reaction in the middle of the hydrogen-based shaft furnace 22, wherein pure hydrogen or coke oven gas, preferably pure hydrogen, is adopted as the reducing gas; the reducing gas enters the hydrogen-based shaft furnace 22 from the annular tuyere in the middle of the hydrogen-based shaft furnace 22, after making contact with the hot roasted pellets at around 500 °C, the reducing gas undergoes a reduction reaction with the roasted pellets while being heated by the roasted pellets (absorbing heat from the roasted pellets and cooling the roasted pellets), as the gas rises, the concentration of the reducing gas gradually decreases, but due to gradual increase in the temperature of the roasted pellets, the reduction reaction is always proceeding, after the flue gas having undergone the reduction reaction is discharged from the flue gas outlet at the top of the hydrogen-based shaft furnace 22, the flue gas is heated above 1000 °C, and then subjected to heat exchange in the tubular heat exchanger 235 (physical heat of the top gas is used for primary preheating) and waste heat recovery in the waste heat boiler 231, and afterwards, the first scrubber 232 is used to remove H₂O and dust from the flue gas. Alternatively, a small amount of ammonia water can be injected into the first scrubber 232 to remove CO₂ and SO₂ from the flue gas according to process requirements, so that the flue gas becomes a high reducing potential gas with H₂ and CO as the main components after simple scrubbing, and the reducing gas passes through the circulating fan 233 and participates in the reduction reaction again; during the reduction reaction, the consumption of the reducing gas is 800-1200 m³/t, the reduction reaction time is 40-100 min, and the pressure of the hydrogen-based shaft furnace 22 of the hydrogen-based shaft furnace reduction system 2 is 200-250 kPa;
   (3.3) cooling treatment: after the reduction reaction, the roasted pellets are subjected to cooling treatment at the lower part of the hydrogen-based shaft furnace 22 by using cooling gas, and the mixed gas after the cooling treatment enters the cooling system 24 from the gas outlet at the lower part of the hydrogen-based shaft furnace 22, and is subjected to oxygenating combustion, waste heat recovery and scrubbing, and then pass through the cooling system 24 and enters the air inlet at the lower part of the hydrogen-based shaft furnace 22 to participate in the cooling treatment; during the cooling treatment, nitrogen and natural gas (preferably in a small amount) are used, while being cooled, sponge iron (DRI) contained in the reduced material can catalyze cracking of CH₄ and form a small amount of Fe₃C to complete carburizing process so as to prevent re-oxidation of DRI; in the above process, the flow rate of the cooling gas is 1200-1800 m³/t, and the cooling gas will bring out a small amount of H₂ in the process of cooling the pellets. In order to ensure safety, mixed gas is subjected to oxygenating combustion and waste heat is utilized, and then H₂O is removed by a scrubber to obtain a mixed gas containing N₂ and a small amount of CO₂, and the mixed gas is recycled; finally, cooled pre-reduced pellets are discharged from the hydrogen-based shaft furnace 22 with a discharge temperature of less than 150 °C, and the metallization rate of the product is determined according to the requirements of the subsequent process.

In the pre-reduced pellet preparation method described above, the prepared pre-reduced pellets have a metallization rate of greater than or equal to 40% and a hydrogen utilization rate of 40% or more. In a preferred embodiment, the pre-reduced pellets have a metallization rate of 40-66% and a hydrogen utilization rate of 50% or more.

The belt type roasting machine-based pre-reduced pellet preparation device and method of the present disclosure will be further described below with reference to specific examples; the belt type roasting machine-based pre-reduced pellet preparation device and method of the following embodiments adopt the device and method described above;

### Examples 1-5

The iron ore raw materials in Examples 1-5 are shown in Table 1, bentonite and finely ground limestone are added into the iron ore raw materials to obtain a mixed material, water is mixed into the mixed material for pelletizing to obtain iron-containing green pellets, and then the iron-containing green pellets are transferred into a belt type roasting machine system for treatments of blast drying, exhaust drying, primary preheating, secondary preheating and roasting in sequence to obtain roasted pellets, and the parameters of the treatments are as shown in Table 1;

**Table 1 Iron ore raw materials and processing parameters**

| | Iron ore raw materials | blast drying | | exhaust drying | | Primary preheating | | Secondary preheating | | Roasting | | Compressive strength of roasted pellet (N/number) |
|---|---|---|---|---|---|---|---|---|---|---|---|---|
| | hematite: magnetite: limonite | Temp. (°C) | Time (min) | Temp. (°C) | Time (min) | Temp. (°C) | Time (min) | Temp. (°C) | Time (min) | Temp. (°C) | Time (min) | |
| Example 1 | 85: 10: 5 | 210 | 2 | 340 | 4 | 700 | 4 | 1080 | 5 | 1270 | 12 | 2846 |
| Example 2 | 50: 50: 0 | 220 | 2 | 360 | 4 | 650 | 4 | 1000 | 5 | 1200 | 10 | 2510 |
| Example 3 | 80: 15: 5 | 210 | 2 | 340 | 4 | 700 | 4 | 1080 | 5 | 1250 | 12 | 2734 |
| Example 4 | 80: 15: 5 | 210 | 2 | 340 | 4 | 700 | 4 | 1030 | 5 | 1230 | 8 | 2668 |
| Example 5 | 80: 20: 0 | 210 | 2 | 340 | 4 | 650 | 4 | 1020 | 5 | 1220 | 10 | 2508 |

The roasted pellets are transferred into a hydrogen-based shaft furnace reduction system for reduction using pure hydrogen or coke oven gas, cooled by nitrogen and methane, and then carburized to obtain pre-reduced pellets. The parameters of the reduction are as shown in Table 2;

**Table 2 Pre-reduced pellets and reduction parameters**

| | Reducing gas composition (H₂: CO: CH₄) | Reducing gas consumption (m³/t) | Reduction end temperature (°C) | Hz utilization rate (%) | Metallization rate of pre-reduced pellet (%) |
|---|---|---|---|---|---|
| Example 1 | 100: 0: 0 | 1000 | 450 | 51 | 66 |
| Example 2 | 100: 0: 0 | 800 | 550 | 62 | 55 |
| Example 3 | 100: 0: 0 | 900 | 650 | 65 | 62 |
| Example 4 | 100: 0: 0 | 850 | 500 | 56 | 58 |
| Example 5 | 60: 15:25 | 1000 | 450 | 43 | 52 |

In Example 1, the iron-containing green pellets have a binary basicity of 1.0. By using the processing parameters shown in Table 1, the cold-state compressive strength of the obtained roasted pellets is high. The roasted pellets were cooled, and reduced by using pure hydrogen with a hydrogen utilization rate of 51%. The pre-reduced pellets obtained after cooling have a metallization rate of 66%.

In Example 2, the iron-containing green pellets have a binary basicity of 0.3. By using the process parameters shown in Table 1, the preheating and roasting temperatures can be appropriately lowered due to high compounding ratio of magnetite, and the roasted pellets were cooled, and reduced by using pure hydrogen with a hydrogen utilization rate of 62%. The pre-reduced pellets obtained after cooling have a metallization rate of 55%.

In Example 3, the iron-containing green pellets have a binary basicity of 0.9. By using the process parameters shown in Table 1, the roasted pellets are cooled, and reduced by using pure hydrogen, with a hydrogen utilization rate of 65%. The pre-reduced pellets obtained after cooling have a metallization rate of 62%.

In Example 4, the iron-containing green pellets have a binary basicity of 0.4. By using the processing parameters shown in Table 1, the preheating and roasting temperatures are appropriately lowered due to the addition amount of basic flux (finely ground limestone) being reduced, and the roasted pellets were cooled, and reduced by using pure hydrogen with a hydrogen utilization rate of 56%. The pre-reduced pellets obtained after cooling have a metallization rate of 58%.

In Example 5, the iron-containing green pellets have a binary basicity of 1.0. By using the processing parameters shown in Table 1, the cold-state compressive strength of the obtained roasted pellets is high. The roasted pellets were cooled, and reduced by using coke oven gas. The hydrogen utilization rate is relatively lower than the hydrogen utilization rate when pure hydrogen is used for reduction due to water-gas reaction between CO and CH₄ and H₂O at high temperature. In this example, the hydrogen utilization rate is only 43%, and the metallization rate of the pre-reduced pellets can reach 52%.

In summary, by organically combining roasting of iron-containing green pellets and reduction of pellets, eliminating pellet cooling process after roasting and pellet heating process before reduction, and using physical heat of roasted pellets to meet the heat required for the reduction process, the belt type roasting machine-based pre-reduced pellet preparation device and method provided by the present disclosure solve the technical problems, such as low hydrogen utilization rate in the traditional direct reduction process, high energy consumption of pellets in oxidizative roasting and direct reduction processes, and uneven pellet quality resulting from uneven heat of the pellets in upper and lower material layers of a traditional belt type roasting machine for pellet oxidation in a high-temperature state; the prepared pre-reduced pellets serve as charge of a blast furnace/converter/electric furnace, so as to significantly reduce fuel consumption and carbon emission in traditional steel processes and create favorable conditions for green development of traditional processes; by organically combine roasting process of iron-containing green pellets and reduction of pellets and eliminating pellet cooling process and pellet heating process of direct reduction, the belt type roasting machine-based pre-reduced pellet preparation device and method provided by the present disclosure utilize pure hydrogen or hydrogen-rich gas for cooling and reduction, so that processing is simpler and energy utilization efficiency is improved; the belt type roasting machine-based pre-reduced pellet preparation device and method provided by the present disclosure use physical heat of roasted pellets to meet the heat required for hydrogen reduction and gas temperature rising, so that thermodynamic condition of hydrogen reduction is more reasonable, and the hydrogen utilization rate can be greatly improved; the belt type roasting machine-based pre-reduced pellet preparation device and method provided by the present disclosure take advantage of the characteristics of microwave, such as deep penetration, good temperature uniformity and integral heating for pellet roasting, so that kinetic conditions of hydrogen reduction of pellets are better, which is beneficial to improving the quality of pre-reduced pellets and increasing speed of reduction reaction; the belt type roasting machine-based pre-reduced pellet preparation device and method provided by the present disclosure roast the iron-containing pellets by using microwave electric heating, which can reduce the roasting temperature of the pellets, reduce the generation of NOx type pollutants in the pre-oxidized pellet preparation process, and are more environmentally friendly; in the belt type roasting machine-based pre-reduced pellet preparation device and method provided by the present disclosure, the overall processutilizes combustion of non-fossil energy sources, such as pyrolysis gas, pyrolysis oil, and biomass oil, green electricity is utilized for microwave electric heating, and pure hydrogen or hydrogen-rich gas is utilized for reduction, so that the pre-reduced pellets can be produced by carbon-free or low carbon process; the belt type roasting machine-based pre-reduced pellet preparation device and method provided by the present disclosure utilizes the physical heat of the roasted pellets to meet the heat required for hydrogen reduction and heating, so that the roasting and reduction processes of the iron-containing pellets are simplified, the hydrogen utilization rate is improved, and the prepared pre-reduced pellets can be used as blast furnace charge, so that the fuel consumption and carbon emission of the blast furnace can be greatly reduced, and the method is a new low-carbon and green pre-reduced pellet preparation process.

It will be appreciated by those skilled in the art that the above-described embodiments are merely illustrative of the present disclosure and are not to be construed as limiting the present disclosure, and that variations and modifications made to the above-described embodiments within the true spirit of the present disclosure are intended to fall within the scope of the appended claims.

## Claims

1. A pre-reduced pellet preparation device, comprising a belt type roasting machine system and a hydrogen-based shaft furnace reduction system; wherein
the belt type roasting machine system is sequentially provided with drying section I, drying section II, preheating section I, preheating section II and a roasting section in a moving direction of iron-containing green pellets, and in the belt type roasting machine system, the iron-containing green pellets are sequentially dried and preheated to obtain preheated pellets, and the preheated pellets are roasted at a temperature of 1170-1270 °C in the roasting section to obtain roasted pellets; the roasting section utilizes microwave electric heating;
the hydrogen-based shaft furnace reduction system comprises a hydrogen-based shaft furnace, a feeding system, a reducing gas system, a cooling system and a discharging system; the feeding system is arranged above the hydrogen-based shaft furnace, and the roasted pellets from the belt type roasting machine system are directly conveyed into the feeding system; the reducing gas system processes flue gas from the hydrogen-based shaft furnace, and provides reducing gas required for reduction treatment to the hydrogen-based shaft furnace; the roasted pellets from the feeding system are reduced in the hydrogen-based shaft furnace to obtain pre-reduced pellets; the cooling system performs cooling treatment on the pre-reduced pellets from the hydrogen-based shaft furnace to obtain cooled pre-reduced pellets; the discharging system is arranged at the bottom of the hydrogen-based shaft furnace and discharges the cooled pre-reduced pellets.

2. The pre-reduced pellet preparation device according to claim 1, **characterized in that** the preheating section II utilizes fuel for heating and communicates with the drying section II through a first heat recuperation fan;
the preheating section I is connected with a tubular heat exchanger of the reducing gas system and is connected with the preheating section II through a combustion fan, and the preheating section I is further connected with the drying section I through a second heat recuperation fan;
both the drying section I and the drying section II are connected to a bag filter through a main exhaust fan.

3. The pre-reduced pellet preparation device according to claim 2, **characterized in that** the feeding system comprises an upper hopper, a middle hopper and a lower hopper and valves are arranged between the upper hopper and the middle hopper as well as between the middle hopper and the lower hopper; and/or
the reducing gas system comprises a tubular heat exchanger, a waste heat boiler, a first scrubber, a circulating fan and a pressurizing fan; the tubular heat exchanger is provided with a flue gas inlet, a flue gas outlet, an air inlet and an air outlet, the flue gas inlet is connected with a flue gas port at the top of the hydrogen-based shaft furnace, the flue gas outlet is connected with the waste heat boiler, the air inlet is connected with a heat exchange fan, and the air outlet is connected with the preheating section I of the belt type roasting machine system; an air outlet of the waste heat boiler is connected with an air inlet of the first scrubber; one end of the circulating fan is connected with an air outlet of the first scrubber, and the other end communicates with an annular tuyere in the middle of the hydrogen-based shaft furnace; the pressurizing fan pressurizes the reducing gas from the circulating fan; and/or
the cooling system comprises an oxygenating combustion unit, a waste heat recovery unit, a second scrubber and a cooling fan; the oxygenating combustion unit is connected with an air outlet at the lower part of the hydrogen-based shaft furnace; one end of the waste heat recovery unit is connected with the oxygenating combustion unit, and the other end is connected with an air inlet of the second scrubber; one end of the cooling fan is connected with an air outlet of the second scrubber, and the other end communicates with an air inlet at the lower part of the hydrogen-based shaft furnace; the air outlet at the lower part of the hydrogen-based shaft furnace is arranged above the air inlet at the lower part of the hydrogen-based shaft furnace.

4. The pre-reduced pellet preparation device according to claim 3, **characterized in that** the upper hopper is provided with a ventilation pipe; the middle hopper is provided with a pressure equalizing device; and the lower hopper is provided with a universal distributor.

5. A pre-reduced pellet preparation method, comprising preparing pre-reduced pellets by using the pre-reduced pellet preparation device according to any one of claims 1-4, roasting the pellets at a temperature of 1170-1270 °C in the belt type roasting machine system of the pre-reduced pellet preparation device to obtain roasted pellets, and then directly feeding the roasted pellets into the hydrogen-based shaft furnace reduction system of the pre-reduced pellet preparation device for reduction to obtain pre-reduced pellets.

6. The pre-reduced pellet preparation method according to claim 5, **characterized in** comprising the following steps:
(1) adding bentonite and finely ground limestone/slaked lime into an iron ore raw material to obtain a mixed material, and then mixing water into the mixed material and pelletizing them to obtain iron-containing green pellets;
(2) placing the iron-containing green pellets into the belt type roasting machine system to form a material layer of the iron-containing green pellets, subjecting the material layer of the iron-containing green pellets to blast drying, exhaust drying, primary preheating and secondary preheating in sequence to obtain preheated pellets, and then roasting the preheated pellets at a temperature of 1170-1270 °C by using microwave electric heating to obtain roasted pellets; and
(3) feeding the roasted pellets into the hydrogen-based shaft furnace reduction system so that the roasted pellets undergo a reduction reaction with reducing gas and then are subjected to cooling treatment by using cooling gas to obtain pre-reduced pellets.

7. The pre-reduced pellet preparation method according to claim 6, **characterized in that** in the step (1), the iron ore raw material is selected from one or more of magnetite, hematite and limonite; and/or
the Blaine specific surface area of the iron ore raw material is greater than or equal to 1500 cm²/g; and/or
the bentonite is added in an amount of 0.7-1.5 wt% of the iron ore raw material; and/or
the mixed material has a binary basicity of 0.3-0.5 or 0.8-1.2; and/or
the iron-containing green pellets has a particle size of 8-20 mm; and/or
in the step (2), the belt type roasting machine system is a belt type roasting machine system laid with a bed charge having a thickness of 80-100 mm, and after the iron-containing green pellets are charged into the belt type roasting machine system, a material layer with a total height of 300-400 mm is formed; and/or
the blast drying is carried out in the drying section I of the belt type roasting machine system, at a temperature of 170-240 °C, an air velocity of 0.8-1.4 m/s, for a time of 1.5-2.5 min; and/or
the exhaust drying is carried out in the drying section II of the belt type roasting machine system, at a temperature of 300-400 °C, an air velocity of 0.8-1.4 m/s, for a time of 4-6 min; and/or
the primary preheating is performed in the preheating section I of the belt type roasting machine system, at a temperature of 600-800 °C, an air velocity of 0.8-1.4 m/s, for a time of 4-6 min; and/or
the secondary preheating is performed in the preheating section II of the belt type roasting machine system, at a temperature of 900-1100 °C, an air velocity of 0.8-1.4 m/s, for a time of 4-6 min; and/or
the fuel for the secondary preheating comprises natural gas, coke oven gas, pyrolysis gas, pyrolysis oil, biomass oil, or biomass carbon; and/or
the secondary preheating utilizes hot air for combustion supporting, wherein the hot air is a mixture of air and hot waste gas from the preheating section I; and/or
in the step (1), when the iron ore raw material contains magnetite, air is added above the mixed material such that oxygen content is controlled to be greater than 14%; and/or
in the roasting process, a time for roasting is 8-12 min; and/or
in the step (3), the hydrogen-based shaft furnace of the hydrogen-based shaft furnace reduction system has a pressure of 200-250 kPa; and/or
the reducing gas is pure hydrogen or coke oven gas; and/or
during the reduction reaction, a consumption amount of the reducing gas is 800-1200 m³/t, and a reduction reaction time is 40-100 min; and/or
the cooling gas comprises nitrogen and natural gas; and/or
during the cooling treatment, the cooling gas has a flow rate of 1200-1800 m³/t; and/or
the pre-reduced pellets is discharged at a temperature of lower than 150 °C; and/or
the pre-reduced pellets is metallized at a rate of greater than or equal to 40%.

8. The pre-reduced pellet preparation method according to claim 7, **characterized in that** in the step (2), during the blast drying, the blast drying is carried out at a temperature of 190-210 °C, and an air velocity of 0.9-1.2 m/s; and/or
during the exhaust drying, the exhaust drying is carried out at a temperature of 330-350 °C, and an air velocity of 0.9-1.2 m/s; and/or
during the primary preheating, the air velocity is 0.9-1.2 m/s; and/or
during the secondary preheating, the air velocity is 0.9-1.2 m/s; and/or
in the step (3), the pre-reduced pellets is metallized at a rate of 40-66%; and/or
the reducing gas is pure hydrogen, and during the reduction reaction, hydrogen utilization rate reaches 50% or more.

9. The pre-reduced pellet preparation method according to claim 6, **characterized in that** in the step (3), the reducing gas is pure hydrogen, and during the reduction reaction, the hydrogen utilization rate reaches 60% or more; and/or
the roasted pellets are conveyed into the feeding system of the hydrogen-based shaft furnace reduction system through a high-temperature-resistant charging bucket, and are then distributed into the hydrogen-based shaft furnace of the hydrogen-based shaft furnace reduction system by the feeding system to participate in the reduction reaction in the middle of the hydrogen-based shaft furnace;
the reducing gas enters the hydrogen-based shaft furnace through the reducing gas system to participate in the reduction reaction, and flue gas after the reaction enters the reducing gas system from the flue gas outlet at the top of the hydrogen-based shaft furnace, and is subjected to heat exchange, waste heat recovery and scrubbing, and then enters the middle of the hydrogen-based shaft furnace to participate in the reduction reaction;
the cooling gas enters the hydrogen-based shaft furnace through the cooling system to participate in the cooling treatment, and mixed gas after the treatment enters the cooling system from the air outlet at the lower part of the hydrogen-based shaft furnace, and is subjected to oxygenating combustion, waste heat recovery and scrubbing, and then enters the lower part of the hydrogen-based shaft furnace to participate in the cooling treatment.

10. The pre-reduced pellet preparation method according to claim 9, **characterized in that** in the step (3), distribution is performed in the feeding system as follows:
the roasted pellets are introduced into the feeding system, and pass through the upper hopper, the middle hopper and the lower hopper of the feeding system in sequence and then are distributed into the hydrogen-based shaft furnace through the universal distributor;
after the roasted pellets are charged into the upper hopper, steam or nitrogen is introduced to replace oxygen so as to ensure that the oxygen content in the upper hopper is smaller than or equal to 1%, then the valve below the upper hopper is opened, after the roasted pellets completely enter the middle hopper, the valve below the upper hopper is closed, a pressure equalization process is completed by using gas having the same composition as the top gas in the hydrogen-based shaft furnace, after the pressure equalization is completed, the valve below the middle hopper is opened, after the roasted pellets completely enter the lower hopper, the valve below the middle hopper is closed, and the valve below the lower hopper is opened for distributing the roasted pellets into the hydrogen-based shaft furnace.
